# EUROPEAN PATENT APPLICATION

(11) **EP 4 410 748 A1**
(43) Date of publication of application: **07.08.2024**
(21) Application number: 22946925.9
(22) Date of filing: 12.09.2022
(51) Int. Cl.: C03B 5/237, C01B 3/02, C01B 13/02, C25B 1/042, F27B 3/26, F27D 7/02, F27D 17/00

(54) **PLANT TO PRODUCE GLASS AND HYDROGEN, AND METHOD FOR PRODUCING GLASS AND HYDROGEN**

(30) Priority: 13.06.2022 JP 2022095088
(71) Applicant: Toyo Glass Co., Ltd., Shinagawa-ku Tokyo 141-0022 (JP)
(72) Inventor: TOJO Satoshi, Yokohama-shi, Kanagawa 230-0001 (JP)
(74) Representative: Schumacher & Willsau
(86) International application number: PCT/JP2022/034045
(87) International publication number: WO 2023/243110

(57) **Abstract**

[Task] To provide a plant and a method for producing glass and hydrogen which can reduce environmental burden.

[Solution] A the plant 1 for producing glass and hydrogen includes: a glass melting furnace 2 that melts a glass raw material with combustion heat of fuel to generate molten glass 12; an exhaust passage 3 which extends from the glass melting furnace and through which exhaust gas generated in the glass melting furnace passes; a boiler 5 that is provided in the exhaust passage and conducts heat exchange between the exhaust gas and water to generate steam; and an electrolyzer 4 that electrolyzes the steam to generate hydrogen and oxygen. The glass melting furnace includes a burner 14 that burns the fuel with a combustion supporting gas having an oxygen concentration of 21 volume% or higher. The burner is connected to the electrolyzer by an oxygen supply pipe 18. The oxygen generated by the electrolyzer is supplied to the burner via the oxygen supply pipe.

## Description

The present invention relates to a plant for producing glass and hydrogen, and a method for producing glass and hydrogen.

### BACKGROUND ART

In glass production, there is a plant having heat storage chambers for using the thermal energy of high temperature exhaust gas generated when melting a glass raw material in preheating combustion air. As disclosed in Patent Document 1, the glass production plant having heat storage chambers includes a glass melting furnace, a first heat storage chamber, and a second heat storage chamber. The first heat storage chamber and the second heat storage chamber internally include a large number of bricks for storing heat. In the first mode of the glass production plant, the air warmed via the first heat storage chamber is taken into the glass melting furnace, the raw material is melted in the glass melting furnace by combustion of fuel, and the exhaust gas is discharged to the outside via the second heat storage chamber. On the other hand, in the second mode of the glass production plant, the air warmed via the second heat storage chamber is taken into the glass melting furnace, the raw material is melted in the glass melting furnace by combustion of fuel, and the exhaust gas is discharged to the outside via the first heat storage chamber. In the glass production plant, the first mode and the second mode are repeated every predetermined period so that the thermal energy contained in the exhaust gas is stored in the first heat storage chamber and the second heat storage chamber and the air supplied to the glass melting furnace is heated.

### PRIOR ART DOCUMENT(S)

### PATENT DOCUMENT(S)

Patent Document 1 JPH8-319121A

### SUMMARY OF THE INVENTION

### TASK TO BE ACCOMPLISHED BY THE INVENTION

As mentioned above, in the glass production plant, the combustion air is preheated by using heat storage chambers. However, the exhaust gas emitted from the heat storage chamber has a high temperature of 400 to 600 °C, and there is a problem that the thermal energy cannot be sufficiently recovered. Further, since the glass production plant is operated at a high temperature, it is necessary to carry out large-scale renovation work on a regular basis. In the renovation work, there is an environmental problem that the bricks of the heat storage chambers are replaced and the old bricks generate a large amount of waste. Therefore, a thermal energy recovery system which can use the thermal energy of the exhaust gas and moreover can reduce environmental burden is desired.

In view of the foregoing background, an object of the present invention is to provide a plant and a method for producing glass and hydrogen which can effectively use the thermal energy of the exhaust gas and can reduce environmental burden.

To achieve the above object, one aspect of the present invention is a plant (1) for producing glass and hydrogen, comprising: a glass melting furnace (2) that melts a glass raw material with combustion heat of fuel to generate molten glass (12); an exhaust passage (3) which extends from the glass melting furnace and through which exhaust gas generated in the glass melting furnace passes; a boiler (5) that is provided in the exhaust passage and conducts heat exchange between the exhaust gas and water to generate steam; and an electrolyzer (4) that electrolyzes the steam to generate hydrogen and oxygen.

According to this aspect, it is possible to generate the high temperature steam by using the heat of the exhaust gas generated in the glass melting furnace and to electrolyze water by using the high temperature steam. Namely, the exhaust gas generated in the glass melting furnace can be used as a heat source for the high temperature steam electrolysis. Due to the foregoing, the thermal energy of the exhaust gas can be effectively used. Further, a plant that can reduce environmental burden can be provided.

In the above aspect, the glass melting furnace may comprise a burner (14) that burns the fuel with a combustion supporting gas having an oxygen concentration of 21 volume% or higher, the burner may be connected to the electrolyzer by an oxygen supply pipe (18), and the oxygen generated by the electrolyzer may be supplied to the burner via the oxygen supply pipe.

According to this aspect, the oxygen generated by the electrolyzer can be used as a combustion supporting gas for burning the fuel in the glass melting furnace. Thereby, the amount of exhaust gas generated can be reduced and the combustion efficiency can be improved.

In the above aspect, the burner may be an oxygen combustion burner that burns the fuel with a combustion supporting gas having an oxygen concentration of 90 volume% or higher.

According to this aspect, air is not required for the combustion of the fuel in the glass melting furnace, and thus, generation of nitrogen oxides can be suppressed. Also, in the case where air is not used, the flame temperature becomes higher compared to the case where air is used, and thus, the efficiency of heat transfer to the glass is improved. Further, heat storage chambers composed of a large number of bricks can be omitted, and thus, the amount of waste generated during renovation or the like of the plant can be reduced.

In the above aspect, the electrolyzer may comprise an anode chamber (44), a cathode chamber (45), a solid electrolyte (46) which separates the anode chamber and the cathode chamber and through which oxygen ions pass, an anode (48) provided on a surface of the solid electrolyte facing the anode chamber, a cathode (49) provided on a surface of the solid electrolyte facing the cathode chamber, and a power supply (51) connected to the anode and the cathode, the steam may be supplied to the cathode chamber so that the hydrogen is generated at the cathode and the oxygen is generated at the anode, and the anode chamber may be connected to the oxygen supply pipe.

According to this aspect, the oxygen generated when producing hydrogen is effectively used as a combustion supporting gas in the glass melting furnace.

In the above aspect, an oxygen supply source (17) may be connected to the oxygen supply pipe.

According to this aspect, the amount of oxygen supplied to the oxygen combustion burner can be stabilized.

In the above aspect, the electrolyzer may be disposed outside the exhaust passage.

According to this aspect, the maintenance work of the electrolyzer becomes easy.

In the above aspect, the boiler may comprise a first heat exchanger that generates the steam by heating liquid water and a second heat exchanger that heats the steam generated by the first heat exchanger, and the second heat exchanger may be disposed in the exhaust passage to be closer to the glass melting furnace than the first heat exchanger is.

According to this aspect, it is possible to generate high temperature steam by using the exhaust gas.

In the above aspect, a temperature of the steam generated by the boiler may be 600 to 1200 °C.

According to this aspect, the electricity required for water electrolysis can be reduced.

In the above aspect, a sodium hydroxide spraying device may be provided in the exhaust passage at a position downstream of the boiler, the sodium hydroxide spraying device being configured to spray sodium hydroxide aqueous solution to the exhaust gas, thereby causing carbon dioxide in the exhaust gas to react with sodium hydroxide to generate a powder having sodium carbonate as a main component.

According to this aspect, the amount of carbon dioxide contained in the exhaust gas released to the atmosphere can be reduced.

In the above aspect, a dust collector that collects the powder in the exhaust gas is provided in the exhaust passage at a position downstream of the sodium hydroxide spraying device.

According to this aspect, the sodium carbonate generated from the carbon dioxide in the exhaust gas can be recovered.

In the above aspect, the glass melting furnace may use the powder collected by the dust collector as part of the glass raw material.

According to this aspect, by reusing the sodium carbonate generated from the carbon dioxide in the exhaust gas as a raw material, it is possible to reduce the amount of discharge of carbon dioxide generated during glass production.

Another aspect of the present invention is a method for producing glass and hydrogen, the method comprising: a melting step of melting a raw material with combustion heat of fuel to generate molten glass (12); a steam generation step of generating steam by using exhaust gas generated in the melting step as a heat source; and an electrolysis step of electrolyzing the steam generated in the steam generation step to generate hydrogen and oxygen.

According to this aspect, it is possible to generate high temperature steam by using the heat of the exhaust gas generated in the glass melting furnace and to electrolyze water by using the high temperature steam. Namely, the exhaust gas generated in the glass melting furnace can be used as a heat source for the high temperature steam electrolysis. Due to the foregoing, a method for producing glass and hydrogen which can utilize the exhaust gas and moreover can reduce environmental burden can be provided.

In the above aspect, the oxygen generated in the electrolysis step may be used as a combustion supporting gas for burning the fuel in the melting step.

According to this aspect, the oxygen generated when producing hydrogen is effectively used as a combustion supporting gas in the glass melting furnace. Since the amount of exhaust gas generated when burning the fuel in the glass melting furnace can be reduced, the combustion efficiency is improved. Also, in the case where a combustion supporting gas having an oxygen concentration of 90 volume% or higher is used, since the flame temperature becomes higher compared to the case where air is used, the efficiency of heat transfer to the glass can be improved, and generation of nitrogen oxides can be suppressed. Heat storage chambers composed of a large number of bricks can be omitted, and thus, the amount of waste generated during renovation or the like of the plant can be reduced.

In the above aspect, the method may comprise a sodium hydroxide aqueous solution spraying step of spraying sodium hydroxide aqueous solution to the exhaust gas cooled in the steam generation step; and a dust collection step of removing a powder from the exhaust gas to which the sodium hydroxide aqueous solution has been sprayed.

According to this aspect, the amount of carbon dioxide contained in the exhaust gas released to the atmosphere can be reduced.

### EFFECT OF THE INVENTION

According to the present invention, it is possible to provide a plant and a method for producing glass and hydrogen which can effectively use the exhaust gas containing thermal energy and can reduce environmental burden.

### BRIEF DESCRIPTION OF THE DRAWINGS

Figure 1 is a block diagram of a plant for glass and hydrogen production;
Figure 2 is a schematic diagram of a glass melting furnace and an exhaust passage; and
Figure 3 is a schematic diagram of an electrolyzer.

### MODE(S) FOR CARRYING OUT THE INVENTION

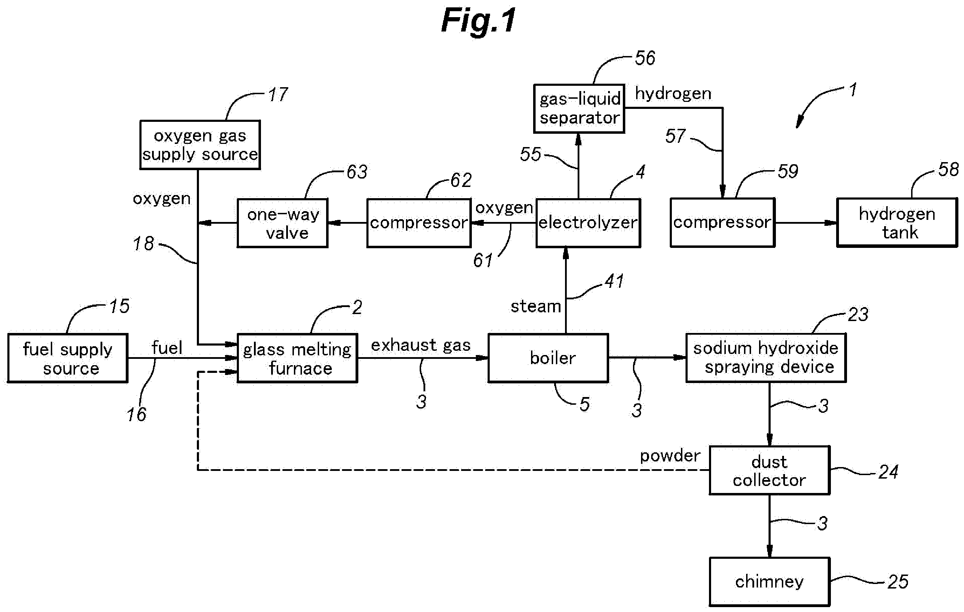

In the following, an embodiment of the present invention will be described. As shown in Figure 1, a plant 1 for producing glass and hydrogen according to the embodiment includes a glass melting furnace 2, an exhaust passage 3, an electrolyzer 4, and a boiler 5.

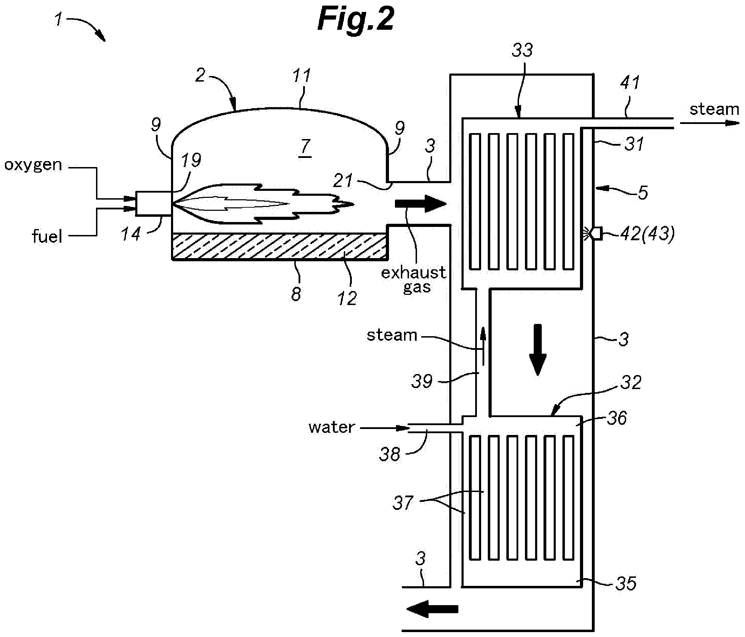

The glass melting furnace 2 generates molten glass 12 by melting a glass raw material with the combustion heat of fuel. The glass melting furnace 2 is also called a glass melting tank. The glass raw material is a known raw material including silica sand, soda ash, lime, etc. As shown in Figure 2, the glass melting furnace 2 includes a bottom wall 8, a side wall 9, and a ceiling 11 that define a melting chamber 7. The glass melting furnace 2 extends in the horizontal direction from a raw material inlet port through which the glass raw material is put into a glass discharge port from which the molten glass 12 is discharged. In a bottom portion of the melting chamber 7, the molten glass 12 is stored.

In the side wall 9, multiple burners 14 for burning the fuel are provided. The fuel may be a gas fuel, such as natural gas, which is a mixture gas containing methane as a main component, liquefied petroleum gas containing propane, butane or the like as a main component, hydrogen gas, etc., or a liquid fuel, such as fuel oil, diesel fuel, petroleum, etc. Each burner 14 mixes the pressurized fuel and a combustion supporting gas and emits the mixture into the melting chamber 7. The combustion supporting gas may be oxygen gas, air, air with an increased oxygen concentration, or the like. In the present embodiment, the burner 14 burns the fuel with a combustion supporting gas having an oxygen concentration of 21 volume% or higher. The burner 14 may be an oxygen combustion burner that burns the fuel with a combustion supporting gas having an oxygen concentration of 90 volume% or higher. The burner 14 is connected to a fuel supply source 15 by a fuel piping 16. Also, the burner 14 is connected to an oxygen gas supply source 17 by an oxygen supply pipe 18. The oxygen gas supply source 17 preferably is a liquefied oxygen tank, for example.

The side wall 9 is formed with burner holes 19 for mounting the respective burners 14. The burners 14 inject the fuel and the combustion supporting gas into the combustion chamber. Preferably, the burners 14 inject the fuel and the combustion supporting gas in the horizontal direction or in a direction inclined slightly upward from the horizontal direction above the molten glass 12 and the glass raw material. In another embodiment, each burner 14 may be provided on the ceiling 11, and each burner 14 may inject the fuel and the combustion supporting gas downward. The fuel and the combustion supporting gas injected from each burner 14 undergo combustion and form a flame. The glass raw material is melted by the combustion heat of the fuel, and the molten glass 12 is generated. Also, exhaust gas is generated by the combustion of the fuel.

The side wall 9 is formed with an exhaust port 21. The exhaust passage 3 is connected to the exhaust port 21. The exhaust passage 3 extends from the glass melting furnace 2 and the exhaust gas generated in the glass melting furnace 2 passes through it.

As shown in Figure 1, the boiler 5, a sodium hydroxide spraying device 23, a dust collector 24, and a chimney 25 are provided in the exhaust passage 3 in this order from the side of the glass melting furnace 2. In the exhaust passage 3 of the present embodiment, conventional heat storage chambers are omitted. In another embodiment, a heat storage chamber may be provided downstream of the exhaust passage 3, and the exhaust gas may be supplied from the heat storage chamber to the boiler 5. The presence or absence of the heat storage chamber may be preferably selected depending on the purpose.

The boiler 5 is a heat exchanger that performs heat exchange between the exhaust gas and water and generates steam from the water. The boiler 5 boils water by using the exhaust gas as a heat source and thereby generates steam. For example, as shown in Figure 2, the boiler 5 includes a housing 31, a first heat exchanger 32, and a second heat exchanger 33. The first heat exchanger 32 heats liquid water and generates steam. The temperature of the steam generated by the first heat exchanger 32 is preferably 100 to 600 °C, for example. The second heat exchanger 33 heats the steam generated by the first heat exchanger 32. The second heat exchanger 33 may be omitted depending on the purpose. The exhaust gas passes inside the housing 31. Preferably, the housing 31 constitutes a part of the exhaust passage 3. The first heat exchanger 32 and the second heat exchanger 33 are disposed inside the housing 31. The second heat exchanger 33 is disposed in the exhaust passage 3 on an upstream side of the first heat exchanger 32, namely, to be closer to the glass melting furnace 2 than the first heat exchanger 32 is.

The first heat exchanger 32 includes a water drum 35, a steam drum 36, and multiple water pipes 37. The steam drum 36 is disposed above the water drum 35. The multiple water pipes 37 extend vertically and are connected to the steam drum 36 and the water drum 35. A water supply pipe 38 and a steam pipe 39 are connected to the steam drum 36. Water is supplied to the steam drum 36 through the water supply pipe 38. The water evaporates into steam and is heated in the water pipes 37.

The steam pipe 39 connects the steam drum 36 and the second heat exchanger 33. The steam is supplied to the second heat exchanger 33 via the steam drum 36 and the steam pipe 39. The steam is further heated in the second heat exchanger 33. In the second heat exchanger 33, the steam is preferably heated to a temperature of 600 to 1200 °C. Namely, the temperature of the steam generated by the boiler 5 is preferably 600 to 1200 °C. The first heat exchanger 32 is connected to the electrolyzer 4 by a steam pipe 41.

The first heat exchanger 32 and the second heat exchanger 33 are preferably made of stainless steel, or chromium molybdenum steel. Also preferably, the outer surfaces of the first heat exchanger 32 and the second heat exchanger 33 have an oxide coating containing at least one of Cr, Si, and Al. These suppress corrosion of the first heat exchanger 32 and the second heat exchanger 33 due to sulfur oxides, steam, oxygen, alkali gas, dust originating from glass raw materials, etc. included in the exhaust gas.

The boiler 5 preferably includes a dust removal device 42 for removing dust adhering to the outer surfaces of the first heat exchanger 32 and the second heat exchanger 33. Thereby, reduction of the amount of heat transmitted from the exhaust gas to the first heat exchanger 32 and the second heat exchanger 33 can be suppressed. Also, blockage in the housing 31 can be prevented. The dust removal device 42 preferably includes a blow device 43 configured to spray at least one of compressed air and high pressure steam toward the outer surface of each of the first heat exchanger 32 and the second heat exchanger 33. Thereby, dust can be properly removed under a high temperature environment. In another embodiment, the dust removal device 42 may be a vibration device that vibrates the outer surfaces of the first heat exchanger 32 and the second heat exchanger 33 by striking them. Also, the dust removal device 42 may be a polishing device that scrubs the outer surfaces of the first heat exchanger 32 and the second heat exchanger 33.

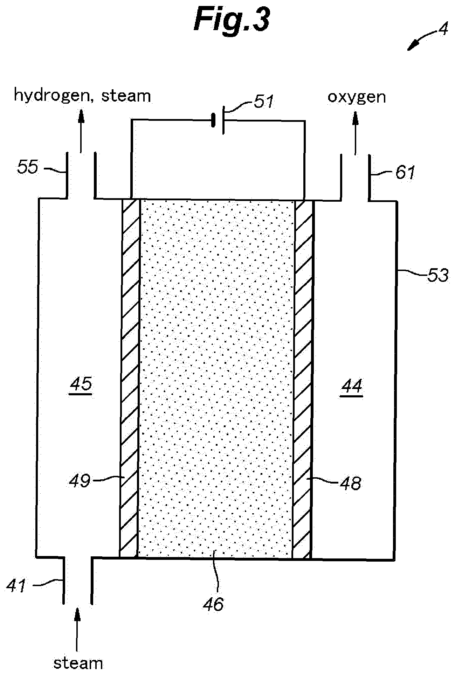

As shown in Figure 3, the electrolyzer 4 includes an anode chamber 44, a cathode chamber 45, a solid electrolyte 46 which separates the anode chamber 44 and the cathode chamber 45 and through which oxygen ions pass, an anode 48 provided on a surface of the solid electrolyte 46 facing the anode chamber 44, a cathode 49 provided on a surface of the solid electrolyte 46 facing the cathode chamber 45, and a power supply 51 connected to the anode 48 and the cathode 49. The electrolyzer 4 is preferably a so-called solid oxide electrolysis cell (SOEC). The electrolyzer 4 may be a cell stack composed of stacked multiple cells each including the anode chamber 44, the cathode chamber 45, the solid electrolyte 46, the anode 48, and the cathode 49. The anode chamber 44 and the cathode chamber 45 are preferably formed inside a housing 53. The electrolyzer 4 is preferably disposed outside the exhaust passage 3.

The solid electrolyte 46 is a solid oxide electrolyte and may be, for example, a stabilized zirconia such as yttria-stabilized zirconia (YSZ), a perovskite-type lithium ion conductive oxide such as (La, Li)TiO3, or a ceria-based solid electrolyte such as a zirconia-doped ceria (Ce1-xZrxO2-y), a gadolinia-doped ceria (Ce1-xGdxO2-y) or the like.

The steam pipe 41 of the boiler 5 is connected to the cathode chamber 45 of the electrolyzer 4. The steam generated by the boiler 5 is supplied to the cathode chamber 45 via the steam pipe 41. In the case where the second heat exchanger 33 is omitted, the steam pipe 39 of the boiler 5 is preferably connected to the cathode chamber 45 of the electrolyzer 4. Namely, the steam generated by the first heat exchanger 32 is preferably supplied to the cathode chamber 45 via the steam pipe 39. In the cathode chamber 45, the temperature of the steam is preferably 100 to 1200 °C, and more preferably 600 to 1200 °C. The cathode chamber 45 is connected to a gas-liquid separator 56 via a piping 55. The gas outlet of the gas-liquid separator 56 is connected to a hydrogen tank 58 via a piping 57. A compressor 59 is provided in the piping 57.

The anode chamber 44 is connected to the oxygen supply pipe 18 via a piping 61. In the piping 61, a compressor 62 and a one-way valve 63 are preferably provided. The one-way valve 63 permits the flow of oxygen gas from the anode chamber 44 to the oxygen supply pipe 18 and prohibits the flow in the opposite direction.

At the cathode 49, the electrochemical reaction described by the following equation (1) occurs.

H2O+2e- → H2 + O2- ... (1)

By the reaction of equation (1), hydrogen gas is generated in the cathode chamber 45. The oxygen ions (O2-) generated at the cathode 49 pass through the solid electrolyte 46 and move toward the anode 48.

At the anode 48, the electrochemical reaction described by the following equation (2) occurs.

O2- → 0.5O2 + 2e- ... (2)

By the reaction of equation (2), oxygen gas is generated in the anode chamber 44.

The hydrogen gas generated in the cathode chamber 45 flows together with the steam to the gas-liquid separator 56 via the piping 55. In the gas-liquid separator 56, the hydrogen gas and the steam are cooled, and the steam is liquefied and is separated from the hydrogen gas. The hydrogen gas separated from the steam by the gas-liquid separator 56 is compressed by the compressor 59 and is sent to the hydrogen tank 58. In the cooling process at the gas-liquid separator 56, the thermal energy taken out from the hydrogen gas and the steam may be recovered and used for other purposes. The recovery of the thermal energy may be achieved by connecting the gas-liquid separator 56 to a reuse facility by piping, for example. The reuse of the thermal energy may be warming of water supplied to the boiler 5, warming of the fuel and oxygen supplied to the glass melting furnace 2, warming of the glass raw material, warming of the electrolyzer 4, etc.

The oxygen gas generated in the anode chamber 44 is supplied to each burner 14 as a combustion supporting gas via the piping 61, the compressor 62, the one-way valve 63, and the oxygen supply pipe 18.

The sodium hydroxide spraying device 23 sprays sodium hydroxide aqueous solution to the exhaust gas. Thereby, as represented by the following chemical equation (3), the carbon dioxide in the exhaust gas reacts with the sodium hydroxide and sodium carbonate and water are generated.

CO2 + 2NaOH → Na2CO3 + H2O ... (3)

Since the temperature of the exhaust gas in the sodium hydroxide spraying device 23 is 100 °C or higher, the water generated according to the chemical equation (3) becomes steam, and the sodium carbonate floats in the exhaust gas as powder. Thereby, the amount of carbon dioxide in the exhaust gas can be reduced. Note that in addition to the reaction of chemical equation (3), the sulfur content in the exhaust gas reacts with the sodium hydroxide, and sodium sulfate (Na2SO4) is generated. The generated sodium sulfate floats in the exhaust gas as powder.

The dust collector 24 collects the powder in the exhaust gas including sodium carbonate and sodium sulfate. The dust collector 24 is preferably a known electric dust collector or bug filter. The powder collected by the dust collector 24 is discharged from a powder discharge port of the dust collector 24. The powder is preferably put into the glass melting furnace 2 as part of the glass raw material. Thereby, the carbon dioxide in the exhaust gas can be effectively used as the glass raw material. The exhaust gas that has passed the dust collector 24 is discharged to the outside through the chimney 25.

The exhaust passage 3 preferably extends laterally from the glass melting furnace 2 and thereafter extends downward. The second heat exchanger 33 is preferably disposed on a side of the glass melting furnace 2. The first heat exchanger 32 is preferably disposed below the second heat exchanger 33. With this arrangement, the first heat exchanger 32 and the second heat exchanger 33 can be efficiently disposed around the glass melting furnace 2.

The plant 1 according to the present embodiment is used in a method for producing glass and hydrogen. The method for producing glass and hydrogen includes a melting step of melting the raw material with the combustion heat of the fuel to generate the molten glass 12, a steam generation step of generating steam by using the exhaust gas generated in the melting step as a heat source, and an electrolysis step of electrolyzing the steam generated in the steam generation step to generate hydrogen and oxygen. Also, the method for producing glass and hydrogen uses the oxygen generated in the electrolysis step as a combustion supporting gas for burning the fuel in the melting step. Further, the method for producing glass and hydrogen includes a sodium hydroxide aqueous solution spray step of spraying sodium hydroxide aqueous solution to the exhaust gas cooled in the steam generation step, and a dust collection step of removing a powder from the exhaust gas to which the sodium hydroxide aqueous solution has been sprayed.

According to the above-described embodiment, it is possible to generate high temperature steam by using the heat of the exhaust gas generated in the glass melting furnace 2 and to electrolyze water by using the high temperature steam. Namely, the exhaust gas generated in the glass melting furnace 2 can be used as a heat source for the high temperature steam electrolysis, and the plant 1 that can reduce environmental burden can be provided. Also, when heat storage chambers are omitted from the plant 1, the amount of waste generated during renovation or the like of the plant 1 can be reduced since the heat storage chamber using bricks as a heat storage material is not used. Due to the foregoing, the plant 1 that can reduce environmental burden can be provided. Also, since the steam supplied to the electrolyzer 4 is generated by the boiler 5 using the exhaust gas, the heat contained in the exhaust gas can be effectively used. The exhaust gas generated by the glass melting furnace 2 has a high temperature of 1000 to 1600 °C, and thus, it is possible to heat the steam to a high temperature of 600 to 1200 °C. Since the steam is heated to a high temperature, the voltage required for the electrolysis of water can be lowered, and hydrogen can be produced energy-efficiently.

The glass melting furnace 2 includes the burners 14 for oxygen combustion, which are configured to burn the fuel with a combustion supporting gas having an oxygen concentration of 90 volume% or higher. Therefore, air is not required for the combustion of the fuel in the glass melting furnace 2, and thus, generation of nitrogen oxides can be suppressed. Also, in the case where the oxygen gas is used, the volume of the combustion supporting gas can be reduced compared to the case where air is used, and thus, the flame temperature can be raised. This improves the efficiency of heat transfer to the glass and the glass melting furnace 2. The electrolyzer 4 generates oxygen together with hydrogen by electrolysis of steam. Therefore, by applying the electrolyzer 4 to the glass melting furnace 2 which uses oxygen as the combustion supporting gas, the oxygen generated by the electrolyzer 4 can be effectively used. In this way, the combination of the glass melting furnace 2 and the electrolyzer 4 has a synergistic effect.

Concrete embodiments have been described in the foregoing, but the present invention can be modified in various ways without being limited to the above embodiments. For example, the cathode chamber 45 of the electrolyzer 4 may be connected to the fuel piping 16 via a piping. Thereby, the hydrogen generated in the electrolyzer 4 is used as part of the fuel supplied to the burners 14.

### LIST OF REFERENCE NUMERALS

- 1:: plant
- 2:: glass melting furnace
- 3:: exhaust passage
- 4:: electrolyzer
- 5:: boiler
- 12:: molten glass
- 14:: burner
- 16:: fuel piping
- 17:: oxygen gas supply source
- 18:: oxygen supply pipe
- 32:: first heat exchanger
- 33:: second heat exchanger
- 41:: steam pipe
- 44:: anode chamber
- 45:: cathode chamber
- 46:: solid electrolyte
- 48:: anode
- 49:: cathode
- 51:: power supply
- 56:: gas-liquid separator

## Claims

1. A plant for producing glass and hydrogen, comprising:
a glass melting furnace that melts a glass raw material with combustion heat of fuel to generate molten glass;
an exhaust passage which extends from the glass melting furnace and through which exhaust gas generated in the glass melting furnace passes;
a boiler that is provided in the exhaust passage and conducts heat exchange between the exhaust gas and water to generate steam; and
an electrolyzer that electrolyzes the steam to generate hydrogen and oxygen.

2. The plant according to claim 1, wherein the glass melting furnace comprises a burner that burns the fuel with a combustion supporting gas having an oxygen concentration of 21 volume% or higher,
the burner is connected to the electrolyzer by an oxygen supply pipe, and
the oxygen generated by the electrolyzer is supplied to the burner via the oxygen supply pipe.

3. The plant according to claim 2, wherein the burner is an oxygen combustion burner that burns the fuel with a combustion supporting gas having an oxygen concentration of 90 volume% or higher.

4. The plant according to claim 2, wherein the electrolyzer comprises an anode chamber, a cathode chamber, a solid electrolyte which separates the anode chamber and the cathode chamber and through which oxygen ions pass, an anode provided on a surface of the solid electrolyte facing the anode chamber, a cathode provided on a surface of the solid electrolyte facing the cathode chamber, and a power supply connected to the anode and the cathode,
the steam is supplied to the cathode chamber so that the hydrogen is generated at the cathode and the oxygen is generated at the anode, and
the anode chamber is connected to the oxygen supply pipe.

5. The plant according to claim 4, wherein an oxygen supply source is connected to the oxygen supply pipe.

6. The plant according to claim 1, wherein the electrolyzer is disposed outside the exhaust passage.

7. The plant according to claim 1, wherein the boiler comprises a first heat exchanger that generates the steam by heating liquid water and a second heat exchanger that heats the steam generated by the first heat exchanger, and
the second heat exchanger is disposed in the exhaust passage to be closer to the glass melting furnace than the first heat exchanger is.

8. The plant according to any one of claims 1 to 7, wherein a temperature of the steam generated by the boiler is 600 to 1200 °C.

9. The plant according to any one of claims 1 to 7, wherein a sodium hydroxide spraying device is provided in the exhaust passage at a position downstream of the boiler, the sodium hydroxide spraying device being configured to spray sodium hydroxide aqueous solution to the exhaust gas, thereby causing carbon dioxide in the exhaust gas to react with sodium hydroxide to generate a powder having sodium carbonate as a main component.

10. The plant according to claim 9, wherein a dust collector that collects the powder in the exhaust gas is provided in the exhaust passage at a position downstream of the sodium hydroxide spraying device.

11. The plant according to claim 10, wherein the glass melting furnace uses the powder collected by the dust collector as part of the glass raw material.

12. A method for producing glass and hydrogen, the method comprising:
a melting step of melting a raw material with combustion heat of fuel to generate molten glass;
a steam generation step of generating steam by using exhaust gas generated in the melting step as a heat source; and
an electrolysis step of electrolyzing the steam generated in the steam generation step to generate hydrogen and oxygen.

13. The method for producing glass and hydrogen according to claim 12, wherein the oxygen generated in the electrolysis step is used as a combustion supporting gas for burning the fuel in the melting step.

14. The method for producing glass and hydrogen according to claim 13, comprising:
a sodium hydroxide aqueous solution spraying step of spraying sodium hydroxide aqueous solution to the exhaust gas cooled in the steam generation step; and
a dust collection step of removing a powder from the exhaust gas to which the sodium hydroxide aqueous solution has been sprayed.
